# FASCICULE DE BREVET EUROPEEN

(11) **EP 0 775 988 B1**
(45) Date de publication et mention de la délivrance du brevet: **03.09.2008**
(21) Numéro de dépôt: 96402488.9
(22) Date de dépôt: 20.11.1996
(51) Int. Cl.: G07B 17/04, G07B 17/02

(54) **Procédé et appareil pour un système de comptabilisation d'affranchissement modulaire**
Verfahren und Apparat für ein modulares Postgebührenabrechnungssystem
Method and apparatus for a modular postage accounting system

(30) Priorité: 22.11.1995 US 562268
(43) Date de publication de la demande: 28.05.1997
(73) Titulaire: NEOPOST TECHNOLOGIES, 92220 Bagneux (FR)
(72) Inventeur: Shah, Chandrakant J., Stockton, California 95204 (US); Robertson, Keith B., Castro Valley, California 94546 (US)
(74) Mandataire: Joly, Jean-Jacques

(56) Documents cités:
- EP-A- 0 493 949
- GB-A- 2 173 741
- GB-A- 2 193 157
- US-A- 4 775 246
- US-A- 4 941 091
- US-A- 5 233 657

## Description

### DOMAINE DE L'INVENTION

La présente invention concerne de façon générale un procédé et un appareil pour un système de comptabilisation d'affranchissement ou postale modulaire. Plus spécifiquement, la présente invention permet l'impression d'un affranchissement en utilisant un quelconque ordinateur comportant les communications appropriées et les capacités d'impression appropriées.

### ART ANTERIEUR

Historiquement, les affranchisseuses ont été des dispositifs autonomes dédiés permettant seulement d'imprimer des timbres imprimés d'affranchissement sur des enveloppes (ou des étiquettes dans le cas de paquets). Ces dispositifs résidaient au niveau d'un site utilisateur et pouvaient assurer un affranchissement seulement pour ce site. Ces affranchisseuses nécessitaient que l'utilisateur transporte physiquement le dispositif jusqu'à un bureau de poste pour une restauration de crédit (augmentation de la valeur d'affranchissement contenue dans l'affranchisseuse). Une avancée par rapport à ce système a été la capacité de permettre aux utilisateurs de recréditer leurs affranchisseuses via des codes fournis par soit le fabricant, soit l'autorité postale une fois que le paiement par le client avait été réalisé. A l'opposé, les affranchisseuses électroniques modernes peuvent souvent être recréditées directement par une partie autorisée, sur le site (au niveau de l'emplacement utilisateur) via une liaison de communication. Un système qui réalise une opération de restauration de crédit de cette manière est connu en tant que système de restauration de crédit d'affranchisseuse par ordinateur (ou "CMRS"). La partie ayant l'autorité pour restaurer le crédit de l'affranchisseuse et pour facturer le client (habituellement le fabricant ou l'autorité postale) peut par conséquent réaliser un accès à l'affranchisseuse et effectuer une restauration de crédit de celle-ci.

Les affranchisseuses sont encore malheureusement limitées à une utilisation au niveau d'un unique emplacement client. Du fait que ces dispositifs sont dédiés (et relativement sophistiqués du point de vue de leurs sûretés intégrées et de leur sécurité) leur prix tend à être prohibitif pour de petites entreprises. Un système qui puisse être connecté à un équipement d'ordinateur existant pour permettre une impression économique efficace de timbres imprimés postaux est connu du document UA-A-4775246. Un tel système permet d'assurer un affranchissement en un emplacement utilisateur à la demande de l'utilisateur. Un dispositif d'affranchissement en système ouvert conforme au préambule de la revendication 1 est décrit dans le brevet US 4,775,246.

### OBJET ET DESCRIPTION DE L'INVENTION

L'invention est definie par l'object des revendications 1,3 ou 5.

Selon la présente invention, un appareil et un procédé sont décrits pour un système de comptabilisation postale modulaire (MPAS). Comme il sera discuté, de nombreuses configurations sont possibles du fait de la modularité du système et sont revendiqués dans les différentes revendications.

Un dispositif d'affranchissement en système ouvert est constitué par un ordinateur à usage général, une imprimante numérique et un dispositif d'affranchissement de sécurité (SMD). Le SMD réalise les fonctions de comptabilisation d'une affranchisseuse et génère des données de timbres imprimés postaux cryptées en vue d'une transmission par l'ordinateur à l'imprimante numérique et en vue d'une impression ultérieure sur un élément de courrier. Les données de crédit d'affranchissement peuvent être entrées dans le SMD en utilisant un CMRS tout simplement comme dans une affranchisseuse classique. Cette configuration nécessite que l'utilisateur maintienne un élément spécial de matériel (le SMD) afin d'imprimer un affranchissement acheté via le CMRS.

Selon un mode de réalisation, la présente invention élimine cette exigence en logeant les fonctions de SMD à l'intérieur du système d'ordinateur CMRS. Un utilisateur qui a obtenu la licence requise auprès du service postal peut établir un contrat avec l'entreprise d'affranchissement afin d'interfacer l'ordinateur à usage général utilisateur avec l'ordinateur CMRS via un modem et une ligne téléphonique. De fait, ceci constitue la fonction d'affranchissement sur une base service. Ceci a l'avantage de simplifier les procédures de restauration de crédit et de comptabilisation pour l'utilisateur et élimine la location ou l'hébergement d'un quelconque équipement spécial. La nécessité de présenter un équipement d'affranchissement en vue d'une inspection postale est également éliminée. Ceci permet également à un SMD de manipuler de multiples sites selon une comptabilisation commune afin de traiter des utilisateurs à multiples sites qui ont des fonctions de comptabilisation centralisées. Cette dernière capacité n'a jamais été possible dans l'architecture des systèmes d'affranchissement passés ou présents.

La présente invention utilise le système téléphonique pour relier l'ordinateur à l'usage général standard utilisateur à un système d'ordinateur CMRS de bureau central dédié. Un ou plusieurs modules SMD peuvent être liés soit à l'ordinateur utilisateur, soit à l'ordinateur CMRS, soit logés dedans. Un unique module SMD peut être dédié à un utilisateur spécifique ou peut desservir un certain nombre d'ordinateurs. De multiples ordinateurs peuvent être placés au niveau d'un ou de plusieurs sites et de multiples sites peuvent être géographiquement séparés. Chaque module SMD réalise la totalité des fonctions de stockage et de comptabilisation de données d'une affranchisseuse classique et transmet des données de timbres imprimés cryptées en vue d'une impression. En vertu du positionnement central du SMD dans le système, celui-ci consolide automatiquement des données de comptabilisation d'affranchissement concernant tous les sites qu'il dessert. Ces données peuvent également être séparées de manière à être rapportées sur des sites individuels. Cette fonctionnalité aussi est unique à la présente invention.

Le CMRS valide des requêtes en provenance des utilisateurs et effectue ainsi des transferts de fonds depuis le compte e., banque de l'utilisateur jusqu'au compte de réception du service postal. Ensuite, le CMRS soit recrédite le dispositif d'affranchissement de l'utilisateur du montant payé directement, soit délivre un code temporaire permettant à l'utilisateur d'accomplir lui-même la restauration de crédit en utilisant le clavier de l'ordinateur. Selon la présente invention, ce processus de restauration de crédit peut être réalisé en quelques secondes (en temps réel), ce qui permet un traitement pratiquement continu du courrier par l'utilisateur. Le CMRS est en communication constante avec chaque SMD et la validation d'un ordre de restauration de crédit peut être réduite à une unique action sur les touches du clavier si on le souhaite. Après validation par l'utilisateur, le reste de la transaction est réalisé par le système CMRS/SMD sans une quelconque autre intervention de la part de l'opérateur.

La présente invention permet à des sites individuels d'un utilisateur à multiples sites de traiter le courrier en continu, le paiement au bureau de poste et le rechargement du crédit étant manipulés par l'intermédiaire d'installations de comptabilisation centrales. Tant que l'installation de comptabilisation centrale utilisateur maintient des réserves de fonds adéquates, les sites individuels ont accès à une desserte en ligne qui réalise l'affranchissement sur une base à la demande. La nécessité que des comptes caisses individuels réalisent un pré-paiement d'affranchissements sur site est par conséquent éliminée, d'où la réalisation d'une amélioration du point de vue des liquidités immédiates et du meilleur contrôle des fonds utilisateur.

Une compréhension plus fouillée de la nature et des avantages de la présente invention peut être réalisée par référence aux parties restantes de la description et des dessins.

### BREVE DESCRIPTION DES DESSINS

La figure 1A est un schéma qui représente un mode de réalisation spécifique de la présente invention ;
la figure 1B est un schéma qui représente un exemple d'une liaison de communication de sécurité entre un ordinateur à usage général et un dispositif d'affranchissement de sécurité ;
la figure 2A est un schéma qui représente un exemple d'un timbre imprimé d'affranchissement produit par la présente invention, une symbolique d'information d'affranchissement étant placée à l'intérieur du timbre imprimé postal ;
la figure 2B est un schéma qui représente un exemple d'un timbre imprimé postal produit au moyen de la présente invention, une symbolique d'information d'affranchissement étant placée à l'extérieur du timbre imprimé postal ;
la figure 2C est un schéma qui représente un exemple d'un timbre imprimé postal produit par la présente invention sans symbolique d'information d'affranchissement ;
la figure 3 est un schéma qui représente un exemple agrandi d'un timbre imprimé postal produit au moyen de la présente invention, une symbolique d'information d'affranchissement étant placée à l'intérieur du timbre imprimé postal ;
la figure 4 est un schéma qui représente un exemple d'un dispositif d'affranchissement de sécurité (SMD) ;
la figure 5 est un schéma qui représente un exemple d'un SMD comportant des capacités d'interface réseau et d'impression ;
la figure 6 est un schéma qui représente un second mode de réalisation spécifique de la présente invention où le SMD est connecté à un ordinateur de station de restauration de crédit ;
la figure 7 est un schéma qui représente un troisième mode de réalisation spécifique de la présente invention qui utilise un réseau local en tant que support de communication ;
la figure 8 est un schéma qui représente un quatrième mode de réalisation spécifique de la présente invention qui utilise un réseau local en tant que support de communication ; et
la figure 9 est un schéma qui représente un système d'audit pour empêcher l'impression de timbres imprimés postaux de manière frauduleuse.

### DESCRIPTION DU MODE DE REALISATION PREFERE

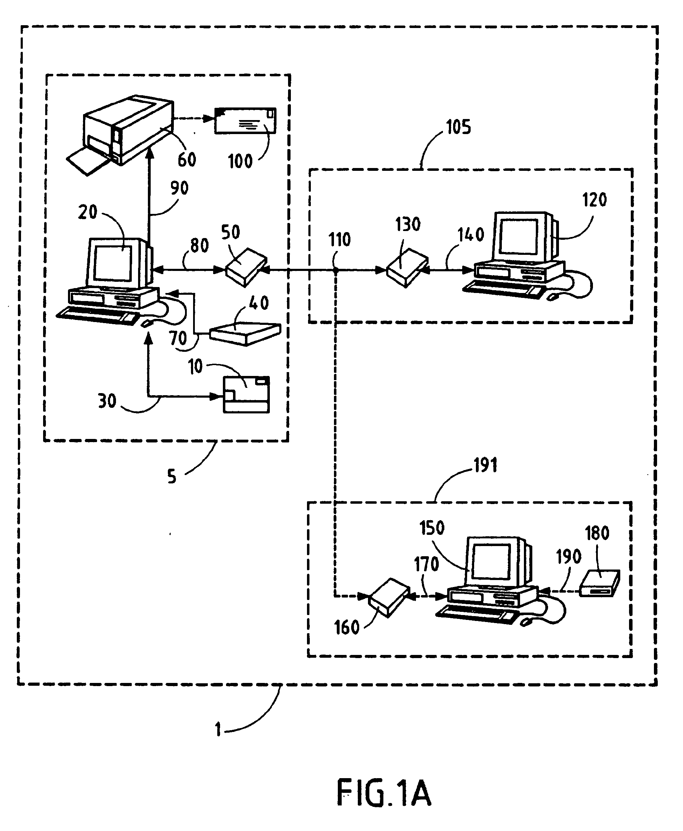

La figure 1A est un schéma qui représente un MPAS 1 conçu selon la présente invention. Le MPAS 1 est constitué par trois composants principaux : un CMRS 105, un système d'information de code postal ZIP (ZCIS) 191 et un dispositif d'affranchissement en système ouvert (OSMD) 5. Le premier composant, soit le CMRS 105, est un système basé sur une communication par modem entre une affranchisseuse électronique moderne (non représentée) et un ordinateur de station de restauration de crédit 120. Comme il est bien connu de l'art, le fonctionnement du CMRS 105 fait l'objet de standards gouvernementaux et du fait qu'une interaction du CMRS 105 avec l'OSMD 5 fera l'objet d'une discussion ultérieurement, le fonctionnement du CMRS 105 ne sera pas traité en détail ici. Le second composant, soit le ZCIS 191, assure un accès par ordinateur à des codes ZIP des États-Unis ainsi qu'à des codes postaux internationaux. Le ZCIS 191 est un système disponible commercialement, qui compte quelque 150 installations aux États-Unis. En tant que tel, le fonctionnement du ZCIS 191 ne sera pas traité en détail non plus. Cependant, l'interaction entre le ZCIS 191 et l'OSMD 5 fera également l'objet d'une discussion ultérieurement. Le composant final, soit l'OSMD 5, réalise toutes les fonctions traditionnellement associées à des affranchisseuses classiques et peut inclure un dispositif d'affranchissement de sécurité (SMD) 10, un ordinateur à usage général (GPC) 20, une balance électronique 40 et une imprimante numérique 60. Le SMD 10 réalise les fonctions de comptabilisation généralement associées à l'affranchisseuse traditionnelle. Le SMD 10 génère des timbres imprimés postaux cryptés en vue d'une transmission par l'ordinateur à une imprimante numérique 60 au niveau de laquelle ceux-ci sont ensuite imprimés sur un élément de courrier (par exemple un élément de courrier 100).

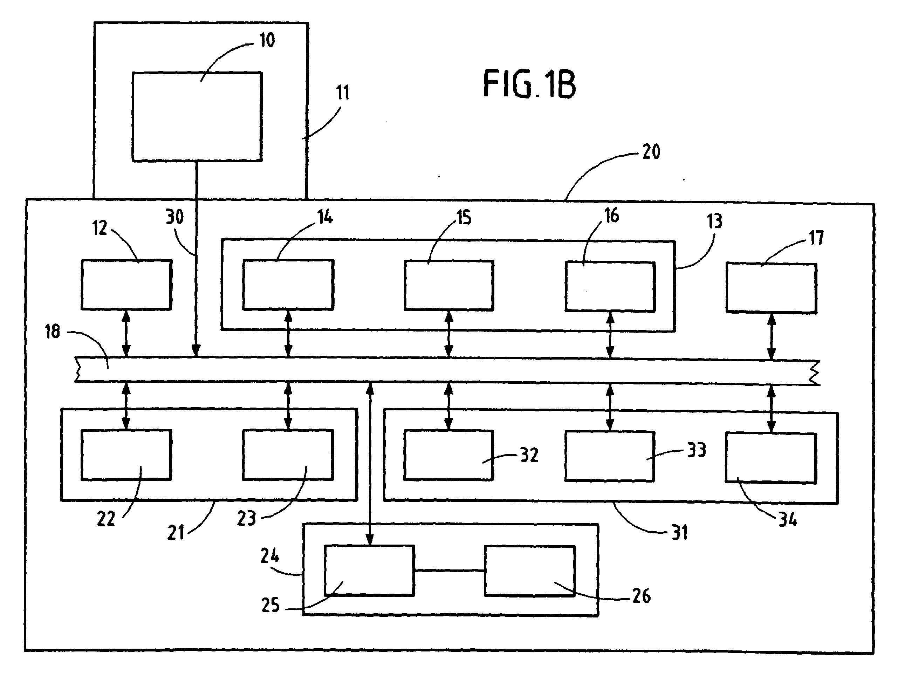

Selon l'invention, la figure 1A représente le SMD 10 lié au GPC 20 via une liaison de communication de sécurité 30. La liaison de communication de sécurité 30 peut être n'importe quel mécanisme permettant de transférer une information qui est imperméable à une interception non autorisée, par exemple l'envoi de données cryptées sur une ligne de communication série RS-232C, la transmission de données au moyen de techniques sans fil (avec ou sans cryptage) ou en logeant le SMD 10 dans le GPC 20. Le SMD 10 peut être constitué séparément du GPC 20. Comme représenté sur la figure 1B, un boîtier de sécurité 11 est prévu pour le SMD 10 de manière à empêcher une violation par des personnes non autorisées. Selon une variante, le SMD 10 peut également être logé dans le GPC 20 et communiquer directement via un système de bus 18. Cette communication peut être cryptée si on le souhaite. Afin d'ajouter une sécurité supplémentaire à cette configuration, le cryptage peut être utilisé sur le logiciel résidant dans le GPC 20.

La figure 1B est un schéma fonctionnel simplifié du GPC 20 selon lequel la présente invention peut être mise en oeuvre. Conformément à une pratique connue, le GPC 20 inclut un processeur 12 qui communique avec un certain nombre de dispositifs périphériques via un sous-système de bus 18. Ces dispositifs périphériques incluent typiquement un sous-système de mémoire 21, une installation d'entrée utilisateur 31, un sous-système d'affichage 24, des dispositifs de sortie tels qu'une imprimante 17 et un système de stockage de fichier 13. Le sous-système de mémoire 21 peut être constitué par un certain nombre d'unités mémoires, incluant une mémoire vive (RAM) principale 22 et une mémoire morte (ROM) 33 dans lesquelles des instructions fixes peuvent être stockées. L'installation d'entrée utilisateur 31 inclut typiquement un clavier 32 et peut en outre inclure un dispositif de pointage 33 (par exemple une souris, une balle roulante ou similaire) ou tout autre dispositif d'entrée classique. Le sous-système d'affichage 24 inclut typiquement le dispositif d'affichage 26 (par exemple un tube à rayons cathodiques (CRT) ou un dispositif similaire) couplé au contrôleur d'affichage 25. Le système de stockage de fichier 13 peut inclure un disque dur 14, un disque souple 15 ou tout autre support de stockage d'information 16.

Dans ce contexte, le terme "sous-système de bus" est utilisé de façon générique de façon à inclure un quelconque mécanisme permettant de laisser les divers composants du système communiquer les uns avec les autres comme souhaité. A l'exception des dispositifs d'entrée et de l'affichage, les autres composants n'ont pas besoin d'être au même emplacement physique. Par conséquent, par exemple, des parties du système du stockage de fichier pourraient être connectées via divers supports de réseau de zones locales ou de zones étendues, y compris des lignes téléphoniques. De façon similaire, les dispositifs d'entrée et l'affichage n'ont pas besoin d'être au même emplacement que le processeur bien que l'on puisse anticiper que la présente invention sera le plus souvent mise en oeuvre dans le contexte d'ordinateurs à usage général et de stations de travail.

Le sous-système de bus 18 est représenté schématiquement en tant qu'unique bus mais un système typique comporte un certain nombre de bus tels qu'un bus local et un ou plusieurs bus d'extension (par exemple ADB, SCSI, ISA, EISA, MCA, NuBus, ou PCI) ainsi que des ports séries et parallèles. Des connexions de réseau sont habituellement établies par l'intermédiaire d'un dispositif tel qu'un adaptateur de réseau sur l'un de ces bus d'extension ou un modem sur un port série. Le système d'ordinateur peut être un système de bureau ou un système portable ou peut être un système de "gros ordinateur" plus important.

Comme la figure 1A l'indique, une ligne de communication 90 (par exemple une ligne d'imprimante parallèle) connecte le GPC 20 à une imprimante numérique 60 (de préférence une imprimante laser). Ceci facilite l'impression de timbres imprimés postaux sur des étiquettes et des enveloppes (à titre d'exemple ici, l'élément de courrier 100). En option, une balance électronique 40 peut être liée au GPC 20 (via une ligne de communication 70). Une ligne de communication 80 (par exemple une ligne de communication série RS-232C) connecte également le GPC 20 à un dispositif d'interface de communication 50 (par exemple un modem). Le dispositif d'interface de communication 50 assure un accès à des systèmes de restauration de crédit d'affranchissement par ordinateur (CMRS) 105 via un support de communication 110. L'ordinateur de station de restauration de crédit 120 communique une information d'affranchissement (par exemple une information de restauration de crédit ou une information d'audit) avec le GPC 20 et le SMD 10 via un dispositif d'interface de communication 130 connecté au support de communication 110 et à l'ordinateur de station de restauration de crédit 120 via une ligne de communication 140. Optionnellement, le GPC 20 et le SMD 10 peuvent communiquer avec l'ordinateur ZCIS 150. L'ordinateur ZCIS 150 est connecté au support de communication 110 via une ligne de communication 170 et un dispositif d'interface de communication 160. Un dispositif CD-ROM 180 qui maintient l'information de code ZIP des États-Unis ainsi que l'information de codes postaux internationaux est également connecté à l'ordinateur ZCIS 150 via une ligne de communication 190.

Comme il est bien connu de l'art, un système tel que celui-ci nécessite un logiciel d'exploitation (non représenté). Un logiciel résidant sur le GPC 20 permet au GPC 20 de communiquer avec le CMRS 150, le SMD 10, l'imprimante numérique 60 et optionnellement, la balance électronique 40. Le logiciel muni de ces capacités est disponible commercialement et il ne sera par conséquent pas décrit en détail ici. Le protocole utilisé par le CMRS 105 (qui supporte la communication entre le SMD 10, le GPC 20 et le CMRS 105) est également bien connu du fait qu'il fait l'objet d'un standard gouvernemental des États-Unis. Le logiciel résidant sur le SMD 10 est également bien connu et est similaire à celui décrit dans le brevet des États-Unis n° 4 484 307 de Quatse ET al.

Une communication entre le GPC 20 et le SMD 10 est bidirectionnelle. Le GPC 20 envoie des commandes de contrôle et des requêtes d'information au SMD 10. Le SMD 10, en retour, peut envoyer des données lisibles par l'être humain (en réponse à des requêtes d'information), des timbres imprimés postaux (en réponse à des requêtes d'affranchissement, lesquelles sont cryptées) ou les deux. Par exemple, l'affranchissement est demandé en requête par un utilisateur (non représenté) au moyen de l'information d'affranchissement entrée par l'utilisateur dans le GPC 20. Le GPC 20 envoie cette information, en association avec la classe/service courrier ainsi que quelconques autres valeurs requises (par exemple l'assurance) de même que le code ZIP de destination au SMD 20. Une quelconque défaillance au niveau de cette communication empêche la délivrance ultérieure de l'affranchissement par le SMD 10. A son tour, le SMD 10 répond en générant un fichier de timbres imprimés postaux de sécurité (via un cryptage) en association avec un numéro de licence et en transmettant cette information au GPC 20. Le GPC 20 reçoit alors cette information et construit un fichier d'impression de timbres imprimés postaux incluant un code bidimensionnel, une information graphique et des données lisibles par l'être humain. Le fichier d'impression de timbres imprimés postaux, en association avec une information optionnelle (telle qu'une information d'adresse, un code à barres de code ZIP et une quelconque information définie par l'utilisateur) est transmis à l'imprimante 60 en vue d'une impression.

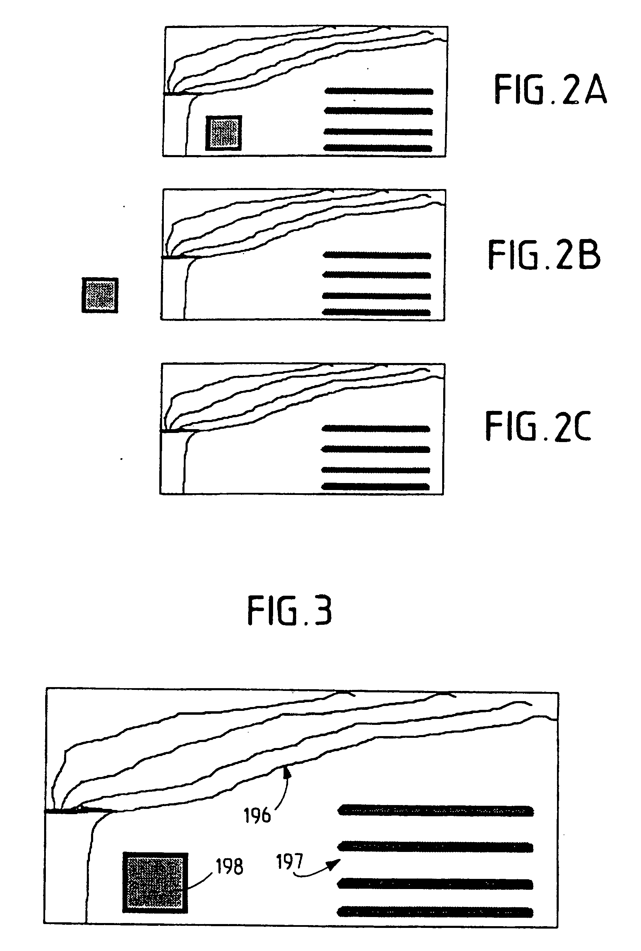

L'imprimante 60 imprime ensuite le timbre imprimé postal ainsi que toute autre information sur une enveloppe (élément de courrier 100), sur une étiquette (non représentée) ou sur tout autre moyen sur lequel il est possible d'apposer un affranchissement. Des exemples des timbres imprimés postaux sont représentés sur les figures 2A à 2C. Comme représenté sur la figure 3 (un agrandissement de la figure 2A), un timbre imprimé postal 195 peut inclure des caractéristiques telles que du graphique 196, une information d'affranchissement lisible par l'être humain 197 et une information d'affranchissement codée 198. Comme représenté sur les figures 2A à 2C, une information d'affranchissement codée 198 peut être incluse à l'intérieur ou à l'extérieur du timbre imprimé d'affranchissement 195 ou totalement omise. L'annexe 1 inclut un listing d'autres communications qui peuvent se produire entre le GPC 20 et le SMD 10.

Le GPC 20, connecté au support de communication 110 via le dispositif d'interface de communication 50, accède au CMRS 105 pour recréditer l'affranchissement du SMD 10, pour permettre un audit de la part des autorités postales ainsi qu'à d'autres fins. Ceci permet l'entrée du crédit d'affranchissement d'une manière similaire aux affranchisseuses électroniques classiques. Selon la présente invention, le GPC 20 communique avec un ordinateur de restauration de crédit 120 afin de restaurer le crédit du SMD 10 (c'est-à-dire afin d'ajouter du crédit d'affranchissement aux valeurs contenues de façon courante dans le SMD 10). D'autres fonctions peuvent bien entendu être assurées d'une façon similaire.

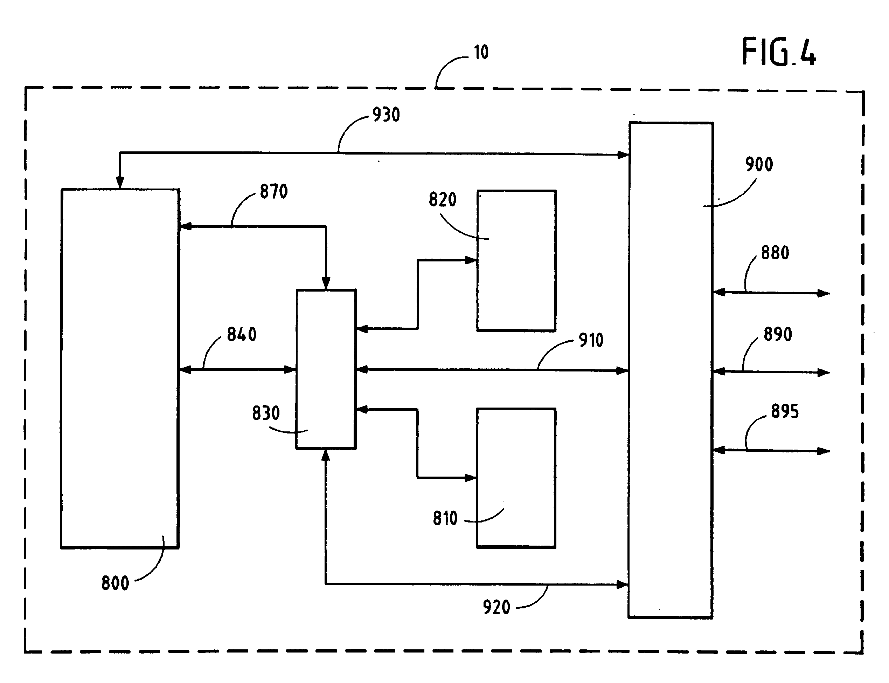

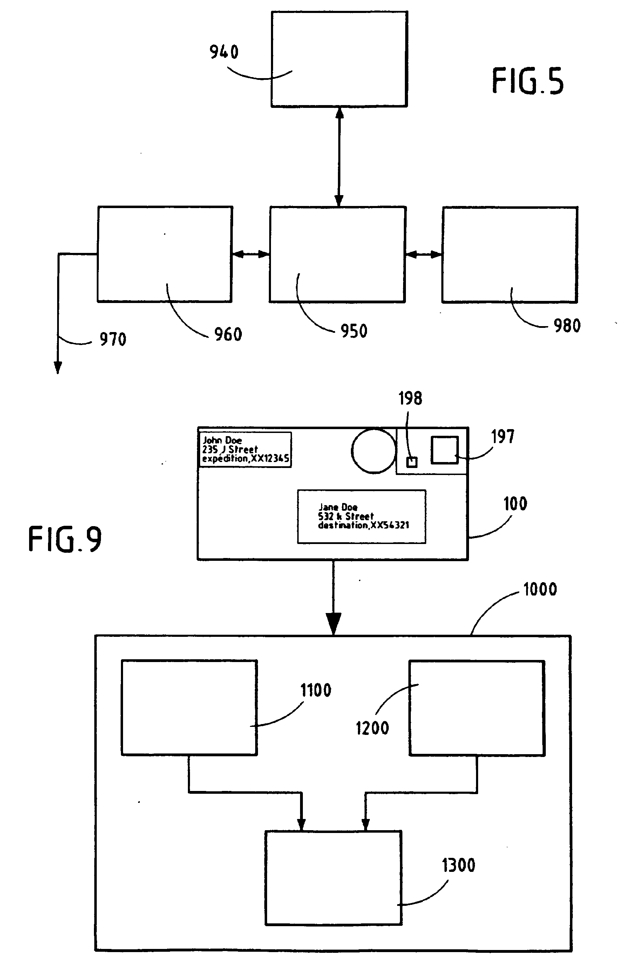

La figure 4 est un schéma qui représente le SMD 10 conçu selon la présente invention. Une mémoire sauvegardée par accumulateur incorporé (BAM) 810 (et optionnellement une seconde BAM 820) reçoit des données en provenance d'un contrôleur de mémoire 830 et applique des données sur celui-ci. Les BAM 810 et 820 peuvent être constituées par exemple par une mémoire RAM statique et par des accumulateurs pour assurer un stockage non volatile d'une information de comptabilisation d'affranchissement. Cette information de comptabilisation d'affranchissement, comme il est bien connu de l'art, inclut de façon générale un registre ascendant, un registre descendant et un registre de total de contrôle (aucun de ces registres n'est représenté sur la figure 4). Comme il est également bien connu de l'art, un registre ascendant maintient une valeur égale à la valeur d'affranchissement utilisée, un registre descendant maintient une valeur égale à la valeur d'affranchissement qui reste inutilisée et un registre de total de contrôle maintient la somme des registres ascendant et descendant. Le contrôleur de mémoire 830 peut être accédé par une unité de commande 800 ou par un circuit de protection d'entrée/sortie (I/O) 900. L'unité de commande 800 accède aux BAM 810 et 820 en lisant ou en écrivant sur des lignes de données 840 et commande ces opérations via des lignes de commande 870. Le circuit de protection I/O 900 accède aux BAM 810 et 820 en lisant ou en écrivant des données sur les lignes de données 910 et commande ces opérations via des lignes de commande 920. Le circuit de protection I/O 900 contient également un port de desserte 880 et un port I/O 890. Le port de desserte 880 permet un accès direct (à l'aide de codes d'accès appropriés) aux BAM 810 et 820 pour la réparation et la maintenance du SMD 10. Le port I/O 890 supporte des communications avec un ordinateur à usage général (non représenté). Un port d'imprimante 895 est optionnel et peut être connecté à une imprimante (non représentée) pour permettre l'impression de timbres imprimés postaux directement depuis le SMD 10. Une telle configuration avec une imprimante 940 est représentée sur la figure 5. Un SMD 950 contenant une interface réseau 960 qui permet la transmission de fichiers de timbres imprimés postaux cryptés jusqu'à des ordinateurs à distance sur un réseau 970 est également représenté sur la figure 5 sur laquelle apparaît également le GPC 980 relié au SMD. Cette configuration fait l'objet d'une discussion ultérieure dans cette section.

L'unité de commande 800 communique avec le port de desserte 880, le port I/O 890 et le port d'imprimante 895 via les lignes de commande/données 930 et le circuit de protection I/O 900. L'unité de commande 800 contient un circuit permettant de commander les fonctions du SMD 10 et peut également contenir une horloge temps réel (non représentée) et une mémoire (également non représentée). Le cryptage peut être réalisé au moyen d'une sous-unité de l'unité de commande 800 (non représentée ; par exemple un crypteur constitué par des composants câblés) ou au moyen d'un algorithme de logiciel (par exemple l'algorithme RSA bien connu). Le SMD 10 peut contenir une information de comptabilisation d'affranchissement pour un unique département (par exemple la totalité de l'entreprise est représentée par un unique compte) ou peut contenir une information de comptabilisation d'affranchissement pour deux départements ou plus dans une organisation client. En outre, ces départements peuvent être largement dispersés géographiquement compte tenu des capacités de la présente invention. Du fait que l'utilisation de la présente invention consolide l'information de comptabilisation d'affranchissement, des utilisateurs à multiples sites bénéficieront d'un suivi simplifié davantage efficace de cette information. La présente invention proposera également une information de comptabilisation d'affranchissement spécifique à un site disponible pour l'installation de comptabilisation centrale de l'utilisateur et pour l'installation de comptabilisation de site également. Le lecteur notera que l'architecture interne du SMD 10 selon la présente invention est parallèle à celle de l'invention décrite dans le brevet des États-Unis n° 4 484 307 de Quatse et al. Par conséquent, l'architecture interne du SMD 10 est bien connue et ne sera pas décrite de manière davantage détaillée.

Au-delà de ce qui a déjà été mentionné, de nombreux autres avantages sont procurés par la présente invention. Le logiciel et les composants câblés nécessaires pour la mise en oeuvre de la présente invention sont peu coûteux par comparaison avec des systèmes d'affranchissement classiques, ce qui permet un affranchissement dédié à un utilisateur particulier. L'affranchissement peut être assuré en tant que service en ligne pour des sites individuels d'un utilisateur à multiples sites. Par comparaison avec les affranchisseuses classiques, l'utilisation de l'affranchissement lui-même est simplifiée. L'utilisateur ou le site individuel n'a pas besoin de maintenir des livres d'historique, un équipement en location conformément à de quelconques règles spéciales, un transport physique d'un dispositif d'affranchissement jusqu'à un bureau de poste pour l'inspection ni la réalisation d'autres tâches de surveillance concernant l'utilisation d'affranchisseuses classiques.

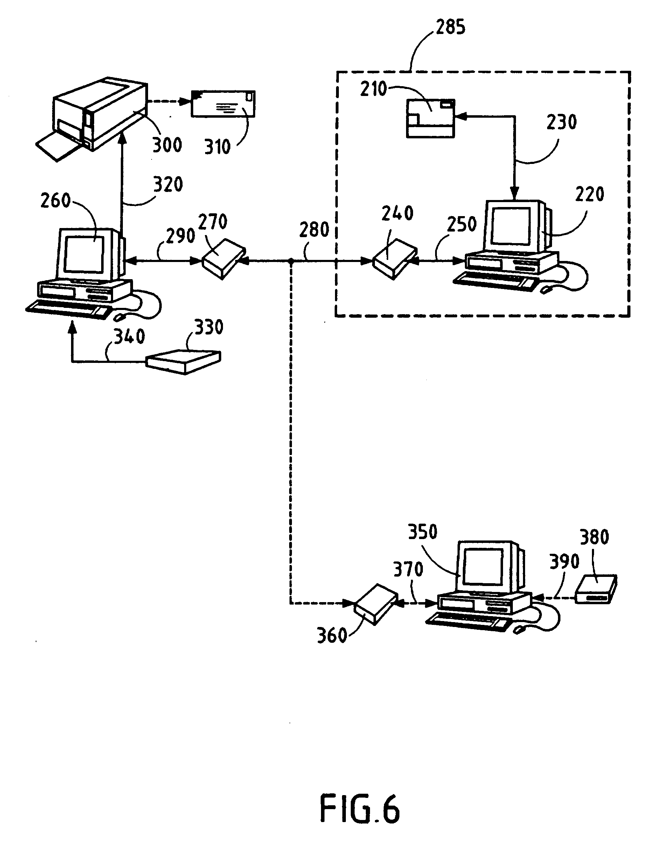

Un second mode de réalisation de la présente invention représenté sur la figure 6 fonctionne d'une manière similaire à celle du mode de réalisation mentionné ci-avant. Cependant, dans ce cas, un SMD 210 est connecté à un ordinateur de station de restauration de crédit 220 via une liaison de communication de sécurité 230. Dans cette configuration, un utilisateur qui a besoin d'un affranchissement, par exemple, entre sa requête en utilisant un GPC 260. Le GPC 260 communique cette requête (contenant une information similaire à celle de l'exemple précédant) à un ordinateur de station de restauration de crédit 220. Cette communication est réalisée via un dispositif d'interface de communication 270, lequel assure un accès à un support de communication 280 et par conséquent à un dispositif d'interface de communication 240 connecté à un ordinateur de station de restauration de crédit 220. L'ordinateur de station de restauration de crédit 220 relaye la requête sur le SMD 210. De multiples SMD peuvent être connectés à l'ordinateur de station de restauration de crédit 220 et peuvent être organisés selon n'importe quelle façon. Par exemple, un client peut avoir toute son information d'affranchissement contenue dans un unique SMD ou dans de multiples SMD. En outre, un MSD peut contenir une information de comptabilisation d'affranchissement pour un unique département (par exemple la totalité de l'entreprise est représentée par un unique compte) ou pour de multiples départements.

Le SMD 210 répond à la requête de la manière préalablement décrite, dans ce cas en retournant un fichier de timbres imprimés postaux de sécurité (cryptés) et un numéro de licence. Cette information revient au GPC 260 via la voie de communication mise en exergue ci-avant. Le GPC 260 reçoit l'information produite par le SMD 210 et construit un fichier d'impression de timbres imprimés postaux comme au préalable. Le fichier d'impression de timbres imprimés postaux, en association avec une information optionnelle (telle qu'une information d'adresse, un codage en barres de code ZIP et n'importe quelle information définie par l'utilisateur) est communiqué à une imprimante 300 en vue d'une impression. Comme mentionné ci-avant, l'annexe 1 inclut un listing d'autres communications qui peuvent se produire entre le GPC 260 (et par conséquent l'ordinateur de station de restauration de crédit 220) et le SMD 210.

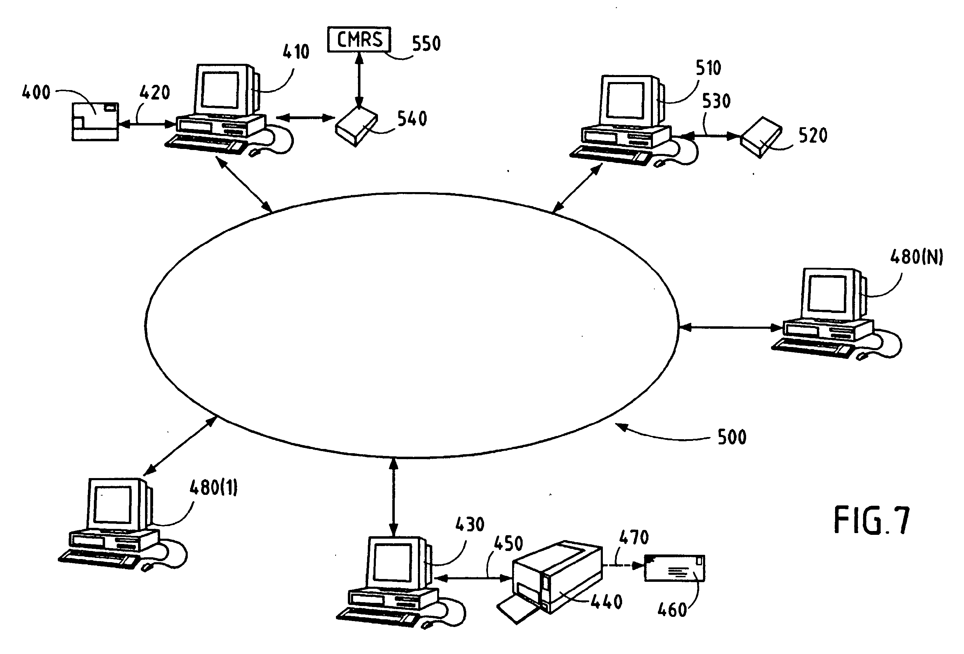

Un troisième mode de réalisation de la présente invention représenté sur la figure 7 fonctionne d'une manière similaire à celle des modes de réalisation précédents. Cependant, dans ce cas, un GPC 410 est connecté à un réseau local (LAN) 500. Bien que le LAN 500 soit représenté selon une topologie en étoile, d'autres topologies de réseau d'ordinateurs et d'autres techniques de mise en réseau peuvent être utilisées. Le GPC 410 est à nouveau connecté à un SMD 400 via une liaison de communication de sécurité 420. Dans cette configuration, un utilisateur qui a besoin d'un affranchissement, par exemple, entre sa requête en utilisant un GPC 430. Le GPC 430 communique cette requête (qui contient une information similaire à celle des exemples précédents) au GPC 410 via le LAN 500. Le GPC 410 relaye la requête sur le SMD 400, lequel répond de la manière mise en exergue dans les exemples précédents. A nouveau, un CMRS 550 peut être mis en communication avec en utilisant le dispositif d'interface de communication 540, tout comme un ZCIS à distance (non représenté). Cependant, un ordinateur ZCIS 510 peut résider sur le LAN 500 afin de produire une information de code ZIP (de la manière préalablement décrite) sur un quelconque ordinateur connecté au LAN 500.

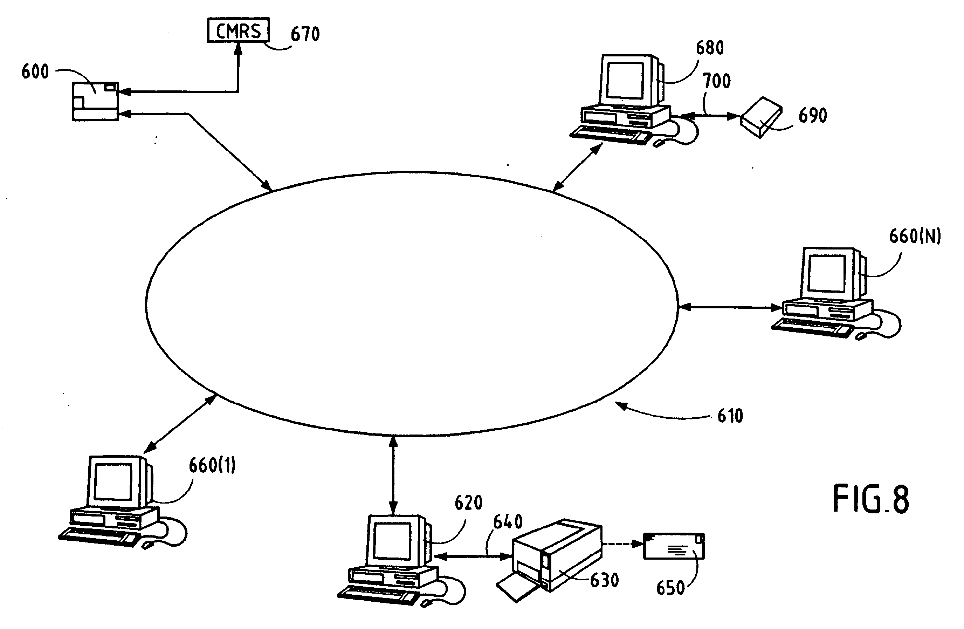

Dans l'exemple, le GPC 410 retourne ensuite le fichier de timbres imprimés postaux cryptés généré par le SMD 400 au GPC 430, lequel à son tour construit un fichier d'impression de timbres imprimés postaux comme au préalable. Le fichier d'impression de timbres imprimés postaux en association avec une information optionnelle (telle qu'une information d'adresse, un codage à barres de code ZIP et une quelconque information définie par l'utilisateur) est transmis à l'imprimante 300 en vue d'une impression. Bien entendu, d'autres communications qui ne sont pas décrites en détail ici peuvent se produire. Comme dans l'exemple précédent, plus d'un SMD peut être connecté au GPC 410. En outre, il peut y avoir de multiples GPC sur le LAN assurant l'affranchissement. De nombreuses topologies et configurations sont par conséquent possibles et sont à considérer en tant que partie de la présente demande. En outre, le SMD 400 peut résider à distance au niveau d'un ordinateur de station de restauration de crédit (non représenté) en tant que partie d'un CMRS 550 comme dans le second exemple. Une communication depuis le GPC 430 pourrait être transmise sur le LAN 500 au GPC 410. Le GPC 410 envoie l'information au CMRS 550 via la liaison de communication 540. Le CMRS 550 répond et l'information est retournée selon la même voie au GPC 430. En outre, comme représenté sur la figure 8, un SMD 600 peut assurer ces services directement sur le GPC 620 via le LAN 500 sans la nécessité du GPC 410.

Un moyen de sécurité permettant d'authentifier des timbres imprimés postaux est d'une grande importance dans les bureaux de poste des États-Unis qui perdent des millions (et éventuellement des milliards) de dollars par an en utilisant des timbres imprimés postaux frauduleux. Dans tous les modes de réalisation qui précèdent, l'imprimante 60 imprime un timbre imprimé postal ainsi qu'une autre information sur l'élément de courrier 100. Comme représenté sur la figure 3, le timbre imprimé postal 195 peut inclure une information postale ou d'affranchissement lisible par l'être humain 197 et une information postale codée 198. Ces informations peuvent être utilisées pour déterminer une authenticité du marquage apposé. L'information postale codée 198 est générée de la manière qui suit. L'information provenant du SMD 10 (et optionnellement du GPC 20) peut être cryptée par le SMD 10 en utilisant un algorithme de cryptage (par exemple DES, RSA ou un algorithme comparable). L'information est ensuite convertie selon un code binaire imprimable d'un quelconque type. Des exemples d'un code binaire imprimable incluent des codes à barres, une matrice de données, un procédé PDF417 ou tout autre procédé comparable. Le procédé par matrice de données est d'un intérêt particulier du fait qu'il permet l'impression d'une quantité relativement importante de données dans un petit espace. Du fait que la présente application (affranchissement sur des enveloppes, des étiquettes et similaire) nécessite une consommation minimum d'espace disponible, une utilisation efficace de la zone d'impression est un avantage.

Un système d'authentification 1000 pour la détection de timbres imprimés postaux frauduleux est représenté sur la figure 9. Un lecteur de ZIP 1100 lit une information d'affranchissement lisible par l'être humain 197 et un lecteur de symbole 1200 lit une information d'affranchissement codée 198. Cette information est passée au GPC 20 dans lequel un logiciel (non représenté) résidant sur le GPC 20 décode puis (si nécessaire) décrypte l'information d'affranchissement codée 198. Le logiciel compare ensuite cette information décodée à l'information d'affranchissement lisible par l'être humain 197 et indique si oui ou non le timbre imprimé postal est authentique. Toute autre information peut être produite par l'utilisateur afin d'aider à l'authentification du timbre imprimé postal. Indépendamment de l'avantage constitué par l'occupation de seulement une petite surface, ce procédé peut procurer également deux niveaux de sécurité. Tout d'abord, le décodage d'une matrice de données nécessite un logiciel spécial ou au moins une compréhension des techniques mises en jeu. En second lieu, même si la matrice de données est capturée et décodée, le cryptage peut être utilisé pour empêcher la visualisation de certaines de ces données, voir de toutes. Par conséquent, ce système satisfait l'exigence constituée par un moyen d'authentification de timbres imprimés postaux sûr et précis.

En outre, bien que l'invention ait été plus particulièrement présentée et décrite par référence à ces modes de réalisation spécifiques, l'homme de l'art comprendra que les modifications qui précèdent ainsi que d'autres au niveau de la forme et des détails peuvent être apportées sans que l'on s'écarte ni de l'esprit, ni du cadre de l'invention. Par exemple, la présente invention n'a pas à être limitée par un quelconque positionnement ou une quelconque connexion du SMD dans le système d'affranchissement. Il peut y avoir un ou plusieurs SMD, chacun stockant une information d'affranchissement pour n'importe quel nombre de sites utilisateur. Ces sites peuvent être locaux ou à distance et largement dispersés géographiquement. Par conséquent, le cadre de l'invention sera déterminé dans les revendications annexées.

## Revendications

1. Dispositif d'affranchissement en système ouvert pour générer des timbres imprimés d'affranchissement de sécurité comprenant:
. un moyen d'affranchissement de sécurité (210, 400) pour générer les timbres imprimés d'affranchissement de sécurité et pour stocker de façon sûre une information d'affranchissement,
. un moyen d'impression (300, 400) pour imprimer les timbres imprimés d'affranchissement de sécurité ainsi qu'une autre information, et
. un ordinateur à usage général (260, 430) relié audit moyen d'impression pour commander et retrouver une information d'affranchissement stockée dans ledit moyen d'affranchissement de sécurité et pour forcer ledit moyen d'impression à imprimer une information d'affranchissement, et **caractérisé par**
. un moyen de communication pour permettre audit ordinateur à usage général d'envoyer et de recevoir l'information d'affranchissement vers et depuis d'autres ordinateurs,
. ledit moyen d'affranchissement de sécurité étant directement relié à l'un au moins (220, 410) desdits autres ordinateurs.

2. Dispositif d'affranchissement en système ouvert selon la revendication 1, **caractérisé en ce que:**
ledit ordinateur à usage général (430) et ledit au moins un desdits autres ordinateurs (410) sont reliés à un réseau de communication (500) pour communiquer ladite information d'affranchissement et des signaux de commande entre ledit moyen d'affranchissement de sécurité (400) et ledit moyen d'impression (440).

3. Dispositif d'affranchissement en système ouvert pour générer des timbres imprimés d'affranchissement de sécurité comprenant :
. un moyen d'affranchissement de sécurité (600) pour générer les timbres imprimés d'affranchissement de sécurité et pour stocker de façon sûre une information d'affranchissement,
. un moyen d'impression (630) pour imprimer les timbres imprimés d'affranchissement de sécurité ainsi qu'une autre information,
. un ordinateur à usage général (620) relié audit moyen d'impression pour commander et retrouver une information d'affranchissement stockée dans ledit moyen d'affranchissement de sécurité et pour forcer ledit moyen d'impression à imprimer une information d'affranchissement, et **caractérisé par**
. un moyen de communication pour permettre audit ordinateur à usage général d'envoyer et de recevoir l'information d'affranchissement vers et depuis d'autres ordinateurs par l'intermediaire d'un réseau de communication,
. ledit moyen de communication étant intégré dans ledit ordinateur à usage général, ledit ordinateur à usage général et ledit moyen d'affranchissement de sécurité comportant chain un port de réseau connecté an réseau de communication (610) pour communiquer ladite information d'affranchissement et des signaux de commande entre ledit moyen d'affranchissement de sécurité (600) et ledit moyen d'impression (630).

4. Dispositif d'affranchissement en système ouvert selon la revendication 3, **caractérisé en ce que** :
ledit moyen d'affranchissement de sécurité comprend un port de communication relié audit réseau de communication pour communiquer ladite information d'affranchissement sur ledit réseau de communication.

5. Dispositif d'affranchissement en système ouvert pour générer des timbres imprimés d'affranchissement de sécurité comprenant :
. un moyen d'affranchissement de sécurité (950) pour générer les timbres imprimés d'affranchissement de sécurité et pour stocker de façon sûre une information d'affranchissement,
. un moyen d'impression (940) pour imprimer les timbres imprimés d'affranchissement de sécurité ainsi qu'une autre information,
. un ordinateur à usage général (980) pour commander et retrouver une information d'affranchissement stockée dans ledit moyen d'affranchissement de sécurité et pour forcer ledit moyen d'impression à imprimer une information d'affranchissement, et **caractérisé par**
. un moyen de communication (960) pour permettre audit ordinateur à usage général d'envoyer et de recevoir l'information d'affranchissement vers et depuis d'autres ordinateurs,
ledit moyen d'affranchissement de sécurité étant en outre directement couplé audit moyen d'impression pour forcer ledit moyen d'impression à imprimer une information d'affranchissement.

6. Dispositif d'affranchissement en système ouvert selon l'une quelconque des revendications 1 à 5, **caractérisé en ce que** ledit moyen d'affranchissement de sécurité comprend :
un moyen de stockage (810, 820) pour stocker de façon redondante et sûre une information d'affranchissement;
un moyen de communication de sécurité (900) pour communiquer de façon sûre avec ledit ordinateur à usage général; et
un moyen de traitement informatique (800), couplé audit moyen de stockage et couplé audit moyen de communication de sécurité, pour commander ledit moyen de stockage et pour transférer une information d'affranchissement depuis ledit moyen de stockage audit moyen de communication de sécurité.

7. Dispositif d'affranchissement en système ouvert selon l'une quelconque des revendications 1 à 5, **caractérisé en ce que** ledit moyen d'affranchissement de sécurité comprend :
une première unité mémoire sauvegardée par accumulateur (810) pour stocker une information d'affranchissement ;
une seconde unité mémoire sauvegardée par accumulateur (820) pour stocker une information d'affranchissement ;
un contrôleur de mémoire (830) couplé à ladite première unité mémoire sauvegardée par accumulateur et à ladite seconde unité mémoire sauvegardée par accumulateur ;
un microprocesseur (800) couplé audit contrôleur de mémoire pour mettre à jour une information d'affranchissement stockée dans ladite première unité mémoire sauvegardée par accumulateur et dans ladite seconde unité mémoire sauvegardée par accumulateur et pour communiquer l'information maintenue dans ladite première unité mémoire sauvegardée par accumulateur et dans ladite seconde unité mémoire sauvegardée par accumulateur;
une unité mémoire couplée audit microprocesseur pour stocker une information nécessaire pour ledit microprocesseur ; et
un port de communication de sécurité (900 ; 890) couplé audit microprocesseur et couplé audit contrôleur de mémoire pour permettre au microprocesseur de communiquer de façon sûre avec ledit ordinateur à usage général et pour permettre audit ordinateur d'accéder à ladite première unité mémoire sauvegardée par accumulateur et à ladite seconde unité mémoire sauvegardée par accumulateur via ledit contrôleur de mémoire.

8. Dispositif d'affranchissement en système ouvert selon la revendication 7, **caractérisé en ce que** ledit moyen d'affranchissement de sécurité comprend en outre un port de desserte (880) couplé audit microprocesseur et couplé audit contrôleur de mémoire pour permettre un accès direct auxdites première et seconde unités mémoires sauvegardées par accumulateur.

9. Dispositif d'affranchissement en système ouvert selon la revendication 7 en ce qu'elle dépend de la revendication 5, **caractérisé en ce que** ledit moyen d'affranchissement de sécurité comprend en outre un port d'imprimante (895) couplé audit microprocesseur et couplé audit contrôleur de mémoire pour permettre au microprocesseur de communiquer de façon sûre avec ledit moyen d'impression.

10. Dispositif d'affranchissement en système ouvert selon l'une quelconque des revendications 1 à 5, **caractérisé en ce qu'**il comporte en outre :
- un premier moyen (1100) de lecture automatisée pour lire une information lisible par l'être humain à partir desdits timbres imprimés d'affranchissement de sécurité ;
- un second moyen (1200) de lecture automatisée pour lire une information d'affranchissement codée à partir desdits timbres imprimés d'affranchissement de sécurité; et
ledit ordinateur à usage général (20 ; 1300) étant couplé audit premier moyen de lecture automatisée et couplé audit second moyen de lecture automatisée pour comparer ladite information lisible par l'être humain et ladite information d'affranchissement codée afin de déterminer l'authenticité desdits timbres imprimés d'affranchissement de sécurité.

## Claims

1. An open-system postage device for generating secure postage indicia comprising:
- a secure postage mean (210, 400) for generating secure postage indicia and for securely storing postage information,
- printing means (300, 400) for printing the secure postage indicia and any other information, and
- a general-purpose computer (260, 430) connected to said printing means for controlling and retrieving postage information stored in said secure postage means and for forcing said printing means to print postage information, and **characterised by**
- communication means for enabling said general-purpose computer to send and receive postage information to and from other computers,
- said secure postage means being directly connected to at least one (220, 410) of said other computer.

2. The open-system postage devise according to claim 1, **characterised in that:**
- said general-purpose computer (430) and said at least one of said other computers (410) are connected to a communications network (500) for communicating said postage information and control signals between said secure postage means (400) and said printing means (440).

3. The open-system postage device for generating secure postage indicia comprising :
- a secure postage means (600) for generating the secure postage indicia and for securely storing postage information,
- printing means (630) for printing the secure postage indicia as well as other information,
- a general-purpose computer (620) connected to said printing means for controlling and retrieving postage information stored in said secure postage means and for forcing said printing means to print postage information, and
**characterised by**
- communication means for enabling said general-purpose computer to send and receive postage information to and from other computers over a communications network,
- said communication means being integrated into said general-purpose computer, said general-purpose computer and said secure postage means each comprising a network port connected to the communications network (610) for communicating said postage information and control signals between said secure postage means (600) and said printing means (630).

4. The open-system postage device according to claim 3 , **characterised in that** said secure postage means comprises a communication port connected to said communications network for communicating said postage information over said communications network.

5. The open-system postage device for generating secure postage indicia comprising:
- a secure postage means (950) for generating the secure postage indicia and for securely storing postage information,
- printing means (940) for printing the secure postage indicia as well as other information,
- a general-purpose computer (980) for controlling and retrieving postage information stored in said secure postage means and for forcing said printing means to print postage information, and **characterised by**
- communication means (960) for enabling said general-purpose computer to send and receive postage information to and from other computers,
- said secure postage means also being coupled directly to said printing means for forcing said printing means to print postage information.

6. The open-system postage device according to any one of claims 1 to 5, **characterised in that** said secure postage means comprises:
- storage means (810, 820) for storing postage information redundantly and securely;
- secure communication means (900) for communicating securely with said general-purpose computer; and
- digital processing means (800), coupled to said storage unit and coupled to said secure communications means, for controlling said storage means and for transferring postage information from said storage means to said secure communications means.

7. The open-system postage device according to any one of claims 1 to 5, **Characterised in that** said secure postage means comprises :
- a first memory unit saved by storage unit (810) for storing postage information;
- a second memory unit saved by storage unit (820) for storing postage information;
- a memory controller (830) coupled to a said first memory unit saved by storage unit and a said second memory unit saved by storage unit;
- a microprocessor (800) coupled to said memory controller for updating postage information stored in said first memory unit saved by storage unit and in said second memory unit saved by storage unit and for communicating information kept in said first memory unit saved by storage unit and in said second memory unit saved by storage unit;
- a memory unit coupled to said microprocessor for storing information necessary for said microprocessor ; and
- a secure communications port (900 ; 890) coupled to said microprocessor and coupled to said memory controller to enable the microprocessor to communicate securely with said general-purpose computer and for enabling said computer to access said first memory unit saved by storage unit and a said second memory unit saved by storage unit via said memory controller.

8. The open-system postage device according to claim 7, **characterised in that** said secure postage means also comprises a server port (880) coupled to said microprocessor and coupled to said memory controller to allow direct access to said first and second memory units saved by storage unit.

9. The open-system postage device according to claim 7, in that it depends on claim 5, **characterised in that** said secure postage means also comprises a printer port (895) coupled two said microprocessor and coupled to said memory controller for allowing the microprocessor to communicate securely with said printing means.

10. The open-system postage device according to any one of claims 1 to 5, **characterised in that** it also comprises
- first automated reading means (1100) for reading information legible by humans from said secure postage indicia ;
- second automated reading means (1200) for reading postage information coded from said secure postage indicia, and
- said general-purpose computer (20 ; 1300) being coupled to said first automated reading means and coupled to said second automated reading means for comparing said information legible by humans and said postage information coded to determine the authenticity of said secure postage indicia.

## Patentansprüche

1. Vorrichtung zum Frankieren im offenen System, um gedruckte Sicherheitsfrankierstempel zu generieren, umfassend:
- ein Sicherheitsfrankiermittel (210, 400), um die gedruckten Sicherheitsfrankierstempel zu generieren und um eine Frankierinformation sicher zu speichern,
- ein Druckmittel (300, 400), um die gedruckten Sicherheitsfrankierstempel sowie eine weitere Information zu drucken, und
- einen Computer für den allgemeinen Gebrauch (260, 430), der mit dem Druckmittel verbunden ist, um eine in dem Sicherheitsfrankiermittel gespeicherte Frankierinformation abzurufen und wiederzufinden und das Druckmittel dazu zu bewegen, eine Frankierinformation zu drucken, und **gekennzeichnet durch**
- ein Kommunikationsmittel, um dem Computer für den allgemeinen Gebrauch zu ermöglichen, die Frankierinformation an andere Computer zu senden und von diesen zu empfangen,
- wobei das Sicherheitsfrankiermittel direkt mit wenigstens einem (220, 410) der anderen Computer verbunden est.

2. Vorrichtung zum Frankieren im offenen System nach Anspruch 1, **dadurch gekennzeichnet, daß** der Computer für den allgemeinen Gebrauch (430) und der wenigstens eine der anderen Computer (410) mit einem Kommunikationsnetz verbunden sind, um die Frankierinformation sowie Steuersignale zwischen dem Sicherheitsfrankiermittel (400) und dem Druckmittel (440) zu übertragen.

3. Vorrichtung zum Frankieren im offenen System, um gedruckte Sicherheitsfrankierstempel zu generieren, umfassend:
- ein Sicherheitsfrankiermittel (600), um die gedruckten Sicherheitsfrankierstempel zu generieren und um eine Frankierinformation sicher zu speichern,
- ein Druckmittel (630), um die gedruckten Sicherheitsfrankierstempel sowie eine weitere Information zu drucken,
- einen Computer für den allgemeinen Gebrauch (620), der mit dem Druckmittel verbunden ist, um eine in dem Sicherheitsfrankiermittel gespeicherte Frankierinformation abzurufen und wiederzufinden und um das Druckmittel dazu zu bewegen, eine Frankierinformation zu drucken, und **gekennzeichnet durch**
- ein Kommunikationsmittel, um dem Computer für den allgemeinen Gebrauch zu ermöglichen, die Frankierinformation mittels eines Kommunikationsnetzes an andere Computer zu senden und von diesen zu empfangen,
- wobei das Kommunikationsmittel in den Computer für den allgemeinen Gebrauch integriert ist, wobei der Computer für den allgemeinen Gebrauch und das Sicherheitsfrankiermittel jeweils einen an das Kommunikationsnetz (610) angeschlossenen Netzport aufweisen, um die Frankierinformation sowie Steuersignale zwischen dem Sicherheitsfrankiermittel (600) und dem Druckmittel (630) zu übertragen.

4. Vorrichtung zum Frankieren im offenen System nach Anspruch 3, **dadurch gekennzeichnet, daß** das Sicherheitsfrankiermittel einen mit dem Kommunikationsnetz verbundenen Kommunikationsport aufweist, um die Frankierinformation über das Kommunikationsnetz zu übertragen.

5. Vorrichtung zum Flankieren im offenen System, um gedruckte Sicherheitsfrankierstempel zu generieren, umfassend:
- ein Sicherheitsfrankiermittel (950), um die gedruckten Sicherheitsfrankierstempel zu generieren und um eine Frankierinformation sicher zu speichern,
- ein Druckmittel (940), um die gedruckten Sicherheitsfrankierstempel sowie eine weitere information zu drucken.
- einen Computer für den allgemeinen Gebrauch (980), um eine in dem Sicherheitsfrankiermittel gespeicherte Frankierinformation abzurufen und wiederzufinden und um das Druckmittel dazu zu bewegen, eine Frankierinformation zu drucken, und **gekennzeichnet durch**
- ein Kommunikationsmittel (960), um dem Computer für den allgemeinen Gebrauch zu ermöglichen, die Frankierinformation an andere Computer zu senden und von diesen zu empfangen,
wobei das Sicherheitsfrankiermittel ferner direkt mit dem Druckmittel gekoppelt ist, um das Druckmittel dazu zu bewegen, eine Frankierinformation zu drucken.

6. Vorrichtung zum Frankieren im offenen System nach einem der Ansprüche 1 bis 5, **dadurch gekennzeichnet, daß** das Sicherheitsfrankiermittel folgendes umfaßt:
ein Speichermittel (810, 820), um eine Frankierinformation redundant und sicher zu speichern,
ein Sicherheitskommunikationsmittel (900), um mit dem Computer für den allgemeinen Gebrauch sicher zu kommunizieren; und
ein Datenverarbeitungsmittel (800), das mit dem Speichermittel und mit dem Sicherheitskommunikationsmittel gekoppelt ist, um das Speichermittel zu steuern und um eine Frankierinformation von dem Speichermittel an das Sicherheitskommunikationsmittel zu übertragen.

7. Vorrichtung zum Frankieren im offenen System nach einem der Ansprüche 1 bis 5, **dadurch gekennzeichnet, daß** das Sicherheitsfrankiermittel folgendes umfaßt:
eine erste akkugesicherte Speichereinheit (810), um eine Frankierinformation zu speichern;
eine zweite akkugesicherte Speichereinheit (820), um eine Frankierinformation zu speichern;
einen Speichercontroller (830), der mit der ersten akkugesicherten Speichereinheit sowie mit der zweiten akkugesicherten Speichereinheit gekoppelt ist;
einen Mikroprozessor (800), der mit dem Speichercontroller gekoppelt ist, um eine in der ersten akkugesicherten Speichereinheit und in der zweiten akkugesicherten Speichereinheit gespeicherte Frankierinformation zu aktualisieren und um die in der ersten akkugesicherten Speichereinheit und in der zweiten akkugesicherten Speichereinheit gehaltene Information zu übertragen;
eine Speichereinheit, die mit dem Mikroprozessor gekoppelt ist, um eine für den Mikroprozessor erforderliche Information zu speichern; und
einen Sicherheitskommunikationsport (900; 890), der mit dem Mikroprozessor und mit dem Speichercontroller gekoppeit ist, um dem Mikroprozessor zu ermöglichen, mit dem Computer für den allgemeinen Gebrauch auf sichere Weise zu kommunizieren, und um dem Computer zu ermöglichen, auf die erste akkugesicherte Speichereinheit sowie auf die zweite akkugesicherte Speichereinheit über den Speichercontroller

8. Vorrichtung zum Frankieren im offenen System nach Anspruch 7, **dadurch gekennzeichnet, daß** das Sicherheitsfrankiermittel ferner einen Zugangsport (880) aufweist, der mit dem Mikroprozessor und mit dem Speichercontroller gekoppelt ist, um einen direkten Zugriff auf die erste und die zweite akkugesicherte Speichereinheit zu ermöglichen.

9. Vorrichtung zum Frankieren im offenen System nach Anspruch 7, abhängig von Anspruch 5, **dadurch gekennzeichnet, daß** das Sicherheitsfrankiermittel ferner einen Druckerport (895) aufweist, der mit dem Mikroprozessor und mit dem Speichercontroller gekoppelt ist, um dem Mikroprozessor zu ermöglichen, mit dem Druckmittel auf sichere Weise zu kommunizieren.

10. Vorrichtung zum Frankieren im offenen System nach einem der Ansprüche 1 bis 5, **dadurch gekennzeichnet, daß** sie außerdem folgendes umfaßt:
- ein erstes Mittel (1100) zum automatisierten Lesen, um eine durch den Menschen lesbare Information aus den gedruckten Sicherheitsfrankierstempeln auszulesen;
- ein zweites Mittel (1200) zum automatisierten Lesen, um eine codierte Frankierinformation aus den gedruckten Sicherheitsfrankierstempeln auszulesen; und
wobei der Computer für den allgemeinen Gebrauch (20; 1300) mit dem ersten Mitteln zum automatisierten Lesen und mit dem zweiten Mittel zum automatisierten Lesen gekoppelt ist, um die durch den Menschen lesbare Information mit der codierten Frankierinformation zu vergleichen, um die Echtheit der gedruckten Sicherheitsfrankierstempel zu bestimmen.
